# FASCICULE DE BREVET EUROPEEN

(11) **EP 3 238 224 B1**
(45) Date de publication et mention de la délivrance du brevet: **10.04.2019**
(21) Numéro de dépôt: 15822969.0
(22) Date de dépôt: 11.12.2015
(51) Int. Cl.: H01H 85/20

(54) **BOÎTIER DE FUSIBLES POUR VÉHICULE AUTOMOBILE**
SICHERUNGSKASTEN FÜR EIN KRAFTFAHRZEUG
FUSE BOX FOR MOTOR VEHICLE

(30) Priorité: 22.12.2014 FR 1463050
(43) Date de publication de la demande: 01.11.2017
(73) Titulaire: Renault S.A.S., 92100 Boulogne-Billancourt (FR)
(72) Inventeur: BOUGEARD, Stephan, 78190 Trappes (FR)
(86) Numéro de dépôt international: PCT/FR2015/053443
(87) Numéro de publication internationale: WO 2016/102801

(56) Documents cités:
- FR-A1- 2 953 980
- FR-A1- 2 988 901
- GB-A- 238 963
- JP-A- 2003 125 517
- US-A- 5 594 403
- US-A1- 2006 024 992
- US-B1- 6 545 861
- US-B1- 6 753 754

## Description

La présente invention se rapporte à un boîtier de fusibles pour véhicule automobile permettant de protéger par des fusibles différentes lignes de courant électrique.

Un domaine d'application envisagé est notamment, mais non exclusivement, celui des véhicules automobiles électriques, et en particulier les réseaux électriques reliant celui à haute tension de la batterie.

L'espace des véhicules automobiles, autre que celui dédié à l'habitacle, devient de plus en plus compact. Au surplus, les véhicules intègrent de nouvelles fonctions ou de nouveaux moyens alimentés en courant électrique. Une telle évolution est bien évidemment marquée plus encore lorsqu'il s'agit des véhicules automobiles à motorisation électrique.

La compacité, notamment du groupe motopropulseur des véhicules induit nécessairement une rationalisation de l'espace, et partant, la diminution des espaces libres.

Tous les éléments du groupe motopropulseur sont concernés, y compris le boîtier de fusibles. En outre, et par nature, ce dernier doit pouvoir être accessible aisément, notamment pour pouvoir changer les fusibles défectueux.

De plus, les modèles de véhicules automobiles évoluent rapidement et incluent de nouveaux équipements électriques qu'il convient également de protéger par des fusibles. L'ajout de nouveaux fusibles nécessite alors d'augmenter les dimensions des boîtiers de fusibles, ce qui est relativement incompatible avec la compacité de l'espace disponible. Aussi, l'espace réservé au boîtier de fusibles est spécifiquement conformé et il tend à se standardiser d'un modèle de véhicule à l'autre.

Aussi, un problème qui se pose et que vise à résoudre la présente invention est de fournir un boîtier de fusibles qui permette, notamment, d'accueillir de nouveaux fusibles sans avoir à modifier la conformation de l'espace réservé au boîtier de fusibles des modèles de véhicules antérieurs.

Le document FR2988901 divulgue un dispositif d'urgence permettant de débrancher la batterie haute tension dans un véhicule électrique, la partie amovible embarquant les deux fusibles protégeant les connexions positive et négative à la batterie. Le document FR2988901 divulgue le préambule de la revendication 1.

Le document US5594403 présente un boîtier fusibles haute tension, dans lequel une paire de fusibles protège deux connexions en entrée de la boîte, une borne de sortie de l'un des fusibles étant dédoublée de manière autoriser trois connexions en sortie, protégées séparément par d'autres fusibles.

Dans ce but, la présente invention propose un boîtier de fusibles pour véhicule automobile selon la revendication 1.

Ainsi, une caractéristique de l'invention réside dans la mise en oeuvre d'une autre paire de fusibles à l'intérieur du boîtier, lorsque l'on désire protéger un autre appareil électrique du véhicule automobile, et en mutualisant les bornes de sortie du boîtier destinées à être reliées à la batterie d'accumulateurs. Une telle mutualisation, permet malgré l'ajout d'une paire de fusibles supplémentaires, de conserver une même taille de boîtier apte à être reçue dans l'espace réservé à cet effet.

De préférence, ladite paire de bornes de sortie s'étend latéralement dudit réceptacle. Ainsi, l'autre paire de fusibles s'étend sensiblement dans un plan moyen défini par ladite une paire de fusibles, tandis que la paire de bornes de sortie est commune aux deux paires de fusibles. En outre, avantageusement, ladite première direction, selon laquelle s'étend ladite paire de bornes de sortie, est sensiblement parallèle audit fond du réceptacle.

De plus, ladite seconde direction, selon laquelle s'étendent les paires de bornes d'entrée, est sensiblement perpendiculaire audit fond. De la sorte, on regroupe les paires de bornes d'entrée dans une même zone d'espace située sous le réceptacle, à l'opposé de l'ouverture. En effet, ladite une paire de bornes d'entrée et ladite une autre paire de bornes d'entrée, s'étendent dans un sens opposé à ladite ouverture. Aussi, les câbles rejoignant ces paires de bornes d'entrée peuvent être constituées en faisceau, tandis que la paire de bornes de sortie demeure unique et est reliée directement à la batterie d'accumulateurs.

Préférentiellement, lesdites autres premières extrémités de ladite au moins une autre paire de fusibles sont respectivement couplées à l'intérieur dudit réceptacle aux bornes de ladite paire de sortie. De la sorte, ce couplage intervient dans l'espace déjà réservé du réceptacle, sans empiéter sur une zone située en dehors de cet espace. Partant, il est aisé, d'un véhicule automobile à l'autre, de venir remplacer le boîtier de fusibles existant par un nouveau incluant une autre paire de fusibles, sans autre modification.

Selon un mode de réalisation de l'invention particulièrement avantageux, ladite au moins une autre paire de fusibles présente une résistance inférieure à ladite une paire de fusibles. Ainsi, lorsque le nouvel appareil électrique requiert une intensité supérieure, des fusibles d'un plus fort ampérage, ou d'une plus faible résistance, sont alors installés à l'intérieur du réceptacle. Malgré leurs différences d'ampérage, les premières extrémités des paires de fusibles sont respectivement couplées aux bornes de la paire de bornes de sortie.

Selon l'invention, le boîtier de fusibles comprend, d'une part un premier conducteur de sortie reliant l'une desdites premières extrémités et l'une desdites autres premières extrémités avec l'une desdites bornes de sortie, et d'autre part un second conducteur de sortie reliant l'autre desdites premières extrémités et l'autre desdites autres premières extrémités avec l'autre desdites bornes de sortie, et lesdits premier et second conducteurs s'étendent selon un même plan moyen proximal.

Ainsi, les premier et second conducteurs de sortie permettent de relier ensemble dans un même plan, les bornes de sortie au nombre de deux, respectivement aux premières extrémités des fusibles. Ainsi qu'on l'expliquera ci-après, les premier et second conducteurs sont noyés dans l'épaisseur du fond du réceptacle, au plus près des fusibles, et ils ne forment qu'un respectivement avec les bornes de sortie. Le réceptacle est moulé dans un matériau polymère, et il a également pour fonction d'isoler électriquement les conducteurs.

Selon l'invention, le boîtier de fusibles comprend une paire de conducteurs d'entrée pour coupler respectivement ladite paire de bornes d'entrée auxdites secondes extrémités desdits fusibles, ladite paire de conducteurs d'entrée présentant respectivement deux premières parties superposées définissant deux plans distaux parallèles.

Selon un mode de mise en oeuvre de l'invention préféré, les deux premières parties de la paire de conducteurs d'entrée sont dans une position écartée des premier et second conducteurs. Elles s'étendent sensiblement parallèlement à ces premier et second conducteurs. Ainsi qu'on l'expliquera plus en détail dans la suite de la description, ces deux premières parties se prolongent respectivement par deux secondes parties sensiblement perpendiculaires formant à leur extrémité les bornes de sortie.

Selon encore l'invention, le boîtier de fusibles comprend une autre paire de conducteurs d'entrée pour coupler respectivement ladite autre paire de bornes d'entrée auxdites autres secondes extrémités desdits fusibles de ladite autre paire, ladite autre paire de conducteurs d'entrée présentant respectivement deux autres premières parties s'étendant dans un même plan intermédiaire.

Selon un mode de mise en oeuvre de l'invention préféré, les deux autres premières parties sont contiguës et elles s'étendent entre les premier et second conducteurs et les deux premières parties de ladite une paire de conducteurs d'entrée. Elles se prolongent respectivement par deux autres secondes parties sensiblement perpendiculaires et formant à leur extrémité les autres bornes de sortie.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est un synoptique partiel présentant un boîtier de fusibles conforme à l'invention dans un ensemble de réseau ;
- la Figure 2 est une vue schématique partielle en perspective du boîtier de fusibles conforme à l'invention et selon un premier angle de vue ;
- la Figure 3 est une vue schématique en perspective du boîtier de fusibles conforme à l'invention selon ledit premier angle de vue;
- la Figure 4 est une vue schématique en perspective du boîtier de fusibles conforme à l'invention selon un deuxième angle de vue ; et,
- la Figure 5 est une vue schématique partielle en perspective du boîtier de fusibles conforme à l'invention et selon un troisième angle de vue.

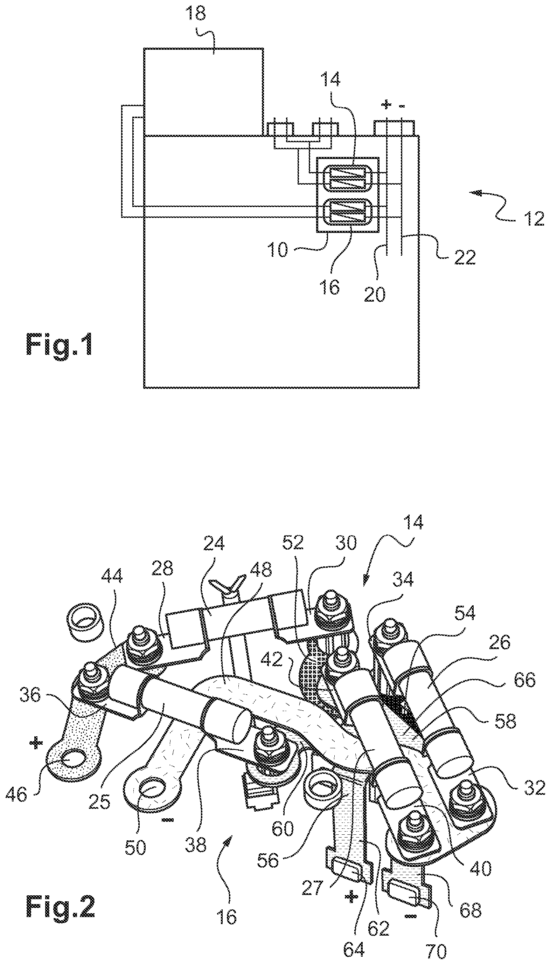

La Figure 1 illustre de manière schématique une boîte à fusibles 10 pour véhicule automobile, située dans un environnement incluant un réseau haute tension batterie 12. La dénomination « fusible » est ici employée pour « coupe-circuit à fusible ». La boîte à fusibles 10 inclut une première paire de fusibles 14 destinée à venir protéger des appareillages électriques, par exemple ici en parallèle, le dispositif de chauffage et la climatisation. On observera que les fusibles de la paire de fusibles 14 sont respectivement installés sur la ligne électrique positive et la ligne électrique négative de l'appareillage.

La boîte à fusibles 10 inclut une seconde paire de fusibles 16 destinée à protéger un chargeur 18. Le chargeur est monté en parallèle des appareillages électriques précités et par là-même, la seconde paire de fusibles 16. En l'espèce, les deux paires de fusibles 14, 16 présentent des valeurs d'ampérage différentes. Par exemple, la première paire de fusibles 14 présente une valeur de 40 A, tandis que la seconde paire de fusibles 16 présente une valeur de 50 A. Les deux paires de fusibles 14, 16 sont respectivement reliées aux câbles positif 20 et négatif 22, eux-mêmes reliés à la batterie d'accumulateurs.

On se reportera à la Figure 2 sur laquelle on retrouve agencés, les deux paires de fusibles 14, 16, d'une part la première paire 14, comprenant un premier fusible positif 24 de la ligne de courant positive et un premier fusible négatif 26 de la ligne de courant négative, et d'autre part la seconde paire 16, comprenant un second fusible positif 25 de la ligne de courant positive et un second fusible négatif 27 de la ligne de courant négative.

S'agissant de la première paire 14, le premier fusible positif 24 présente une première borne positive basse tension 28 et une seconde borne positive basse tension 30, tandis que le premier fusible négatif 26 présente une première borne négative basse tension 32 et une seconde borne négative basse tension 34.

Quant à la seconde paire 16, le second fusible positif 25 présente une première borne positive haute tension 36 et une seconde borne positive haute tension 38, tandis que le second fusible négatif 27 présente une première borne négative haute tension 40 et une seconde borne négative haute tension 42. Les notions de «basse tension» et de «haute tension» sont ici relatives aux différents réseaux d'alimentation électrique du véhicule automobile.

Les premiers fusibles positif 24 et négatif 26, destinés à protéger le dispositif de chauffage et la climatisation, présente par exemple une valeur d'intensité limite de 40 A, tandis que les seconds fusibles positif 25 et négatif 27, présentent par exemple une valeur d'intensité limite de 50 A.

Selon l'invention, la première borne positive basse tension 28 et la première borne positive haute tension 36, sont reliées électriquement ensemble au moyen d'un premier conducteur de sortie 44. Les extrémités des fusibles sont solidarisés au premier conducteur de sortie 44 par un assemblage vissé. Le premier conducteur de sortie 44, formé d'une première platine, est prolongée par une première extrémité libre terminée par un premier oeillet 46 formant une borne de sortie positive. Aussi, la première borne négative basse tension 32 et la première borne négative haute tension 40 sont reliées électriquement ensemble au moyen d'un second conducteur de sortie 48. Ce dernier est formé d'une seconde platine, s'étendant longitudinalement en L et se terminant par une seconde extrémité libre terminée par un second oeillet 50 formant une borne de sortie négative. La seconde extrémité libre vient s'étendre au voisinage de la première extrémité libre. Ainsi, les fusibles d'intensité limite différentes sont agencés par polarité et leurs extrémités sont couplées entre elles au moyen, respectivement, du premier conducteur de sortie 44 et du second conducteur de sortie 48 pour être reliées respectivement aux câbles positif 20 et négatif 22 de la batterie d'accumulateurs. Aussi, les premier et second conducteurs de sortie 44, 48 ont un rôle de « busbar », ou de barre omnibus, en langue française. En l'espèce, elle présente trois points de liaison séparés. Un tel agencement participe d'un faible encombrement de la boîte à fusibles 10. Au surplus, et par nature, les premier et second conducteurs de sortie 44, 48 présentent une faible impédance.

On observera que les premier 44 et second 48 conducteur de sortie sont par nature plats et qu'ils s'étendent dans un même plan proximal PP situé en dessous et au voisinage des paires de fusibles 14, 16. Egalement, les paires de fusibles 14, 16 s'étendent selon un plan moyen PF, auquel le plan proximal est sensiblement parallèle.

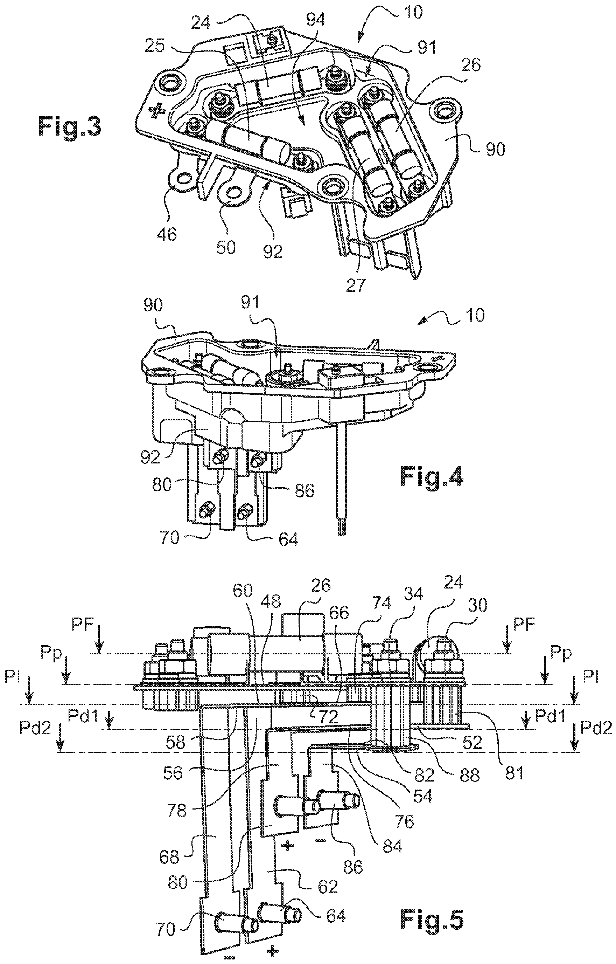

En outre, la boîte à fusibles 10 comporte une première paire de conducteurs d'entrée, un premier conducteur d'entrée positif 52 et un premier conducteur d'entrée négatif 54 que l'on décrira plus en détail en référence à la Figure 5. Ils sont respectivement reliés à la seconde borne positive basse tension 30 du premier fusible positif 24 et à la seconde borne négative basse tension 34 du premier fusible négatif 26.

La boîte à fusibles 10 comprend une seconde paire de conducteurs d'entrée, un second conducteur d'entrée positif 56 et un second conducteur d'entrée négatif 58. Ils sont respectivement reliés à la seconde borne positive haute tension 38 du second fusible positif 25 et à la seconde borne négative haute tension 42 du second fusible négatif 27.

Le second conducteur d'entrée positif 56 présente une première seconde partie positive 60 et une seconde seconde partie positive 62 pliée sensiblement perpendiculairement à la première. La seconde seconde partie positive 62 se prolonge axialement par une seconde borne d'entrée positive 64. Aussi, la première seconde partie positive 60 s'étend sensiblement parallèlement au plan proximal PP, tandis que la seconde seconde partie positive 62 s'en étend sensiblement perpendiculairement.

Le second conducteur d'entrée négatif 58 présente une première seconde partie négative 66 et une seconde seconde partie négative 68 également pliée sensiblement perpendiculairement à la première et, parallèle et contigue à la seconde seconde partie positive 62. La seconde seconde partie négative 68 se prolonge axialement par une seconde borne d'entrée négative 70.

La première seconde partie négative 66 s'étend sensiblement parallèlement au plan proximal PP, et la seconde seconde partie négative 68 s'étend sensiblement perpendiculairement au plan proximal PP.

La seconde paire de conducteurs d'entrée 56, 58 est situé en dessous du premier fusible négatif 26 et du second fusible négatif 27 lesquels sont agencés sensiblement parallèlement entre eux. On se reportera sur la Figure 5 montrant plus précisément la seconde paire de conducteur d'entrée 56, 58 ; d'une part le second conducteur d'entrée positif 56 présentant sa première seconde partie positive 60 et sa seconde seconde partie positive 62 perpendiculaire terminée par la seconde borne d'entrée positive 64, et d'autre part, le second conducteur d'entrée négatif 58 présentant sa première seconde partie négative 66 et sa seconde seconde partie négative 68 terminée par la seconde borne d'entrée négative 70. On observera sur cette Figure 5 que les premières secondes parties positive 60 et négative 66 de la paire de conducteur d'entrée 56, 58 s'étendent dans un même plan intermédiaire PI sensiblement parallèle au plan proximal PP. Ces premières secondes parties positive 60 et négative 66 s'étendent en dessous et à distance du second conducteur de sortie 48. Pour ce faire, elles sont respectivement reliées à la seconde borne positive haute tension 38 du second fusible positif 25 et à la seconde borne négative haute tension 42 du second fusible négatif 27 par l'intermédiaire de deux premiers plots intermédiaires 72, 74 formant entretoises.

On retrouve sur cette Figure 5 le premier conducteur d'entrée positif 52 et le premier conducteur d'entrée négatif 54 respectivement reliés à la seconde borne positive basse tension 30 du premier fusible positif 24 et à la seconde borne négative basse tension 34 du premier fusible négatif 26.

Le premier conducteur d'entrée positif 52 présente une première première partie positive 76 et une seconde première partie positive 78 pliée sensiblement perpendiculairement à la première. La seconde première partie positive 78 se prolonge axialement par une première borne d'entrée positive 80. Aussi, la première première partie positive 76 s'étend également sensiblement parallèlement au plan proximal PP, tandis que la seconde seconde partie positive 78 s'en étend sensiblement perpendiculairement. En revanche, la première première partie positive 76 s'étend selon un premier plan distal Pd1 et axialement à distance de la première seconde partie positive 60 et de la première seconde partie négative 66. Pour ce faire, la première partie positive 76 est reliée à la seconde borne positive basse tension 30 du premier fusible positif 24 par l'intermédiaire d'un premier plot distal 81 formant entretoise et dont la longueur est sensiblement supérieure à celle des deux premiers plots intermédiaires 72, 74.

Le premier conducteur d'entrée négatif 54 présente une première première partie négative 82 et une seconde première partie négative 84 également pliée sensiblement perpendiculairement à la première et, parallèle et contigue à la seconde première partie positive 78. La seconde première partie négative 84 se prolonge axialement par une première borne d'entrée négative 86.

En revanche, la première première partie négative 82 est reliée à la seconde borne négative basse tension 34 du premier fusible négatif 26 par l'intermédiaire d'un second plot distal 88 d'une longueur supérieure à celle du premier plot distal 81. Aussi, la première première partie négative 82 vient-elle croiser la première première partie positive 76 du premier conducteur d'entrée positif 52 en dessous de celle-ci. La première première partie négative 82 s'étend alors selon un second plan distal Pd2.

On observera que la seconde seconde partie positive 62 et la seconde seconde partie négative 68 sont d'une même longueur supérieure à celle des seconde première partie positive 78 et seconde première partie négative 84. Partant, la seconde borne d'entrée positive 64 et la seconde borne d'entrée négative 70 situées au même niveau, s'étendent en dessous du niveau de la première borne d'entrée positive 80 et de la première borne d'entrée négative 86.

De la sorte, on vient superposer sur quatre niveaux, en dessous des paires de fusibles 14, 16, des premier et second conducteurs de sortie 44, 48, jusqu'à la première première partie négative 82, les couplages électriques entre les fusibles 24, 25, 26, 27 et les bornes de sortie positive et négative 46, 50 d'une part, et les premières bornes d'entrée positive 80, et négative 86 et les secondes bornes d'entrée positive 64 et négative 70 d'autre part. En réalisant ces couplages électriques en dessous du niveau des fusibles, on concourt à la compacité de la boîte à fusible 10.

En effet, on retrouve sur la figure 3, la boîte à fusible 10, laquelle comprend un réceptacle 90 présentant une ouverture 91 débouchant sur un fond 92 et une paroi de fond 94 sur laquelle on retrouve agencés les premiers fusibles positif 24 et négatif 26, et les seconds fusibles positif 25 et négatif 27. Aussi, les premier et second conducteurs de sortie 44, 48, la première paire de conducteurs d'entrée, 52, 54, et la seconde paire de conducteurs d'entrée 56, 58, sont noyés ensemble dans le fond 92 du réceptacle 90. Le réceptacle 90 est en réalité surmoulé sur les conducteurs. Les bornes de sortie positive et négative 46, 50 s'étendent alors latéralement du réceptacle 90. Les fusibles 24, 25, 26, 27 sont ensuite installés et connectés sur la paroi de fond 94 du réceptacle 90.

Le matériau plastique de surmoulage est bien évidemment un matériau isolant vis-à-vis du courant électrique.

On retrouve alors sur la figure 3, les bornes de sortie positive 46 et négative 50, tandis que sur la figure 4 illustrant la boîte à fusible 10 depuis l'arrière par rapport à la représentation de la figure 3, on retrouve les premières bornes d'entrée positive 80, et négative 86 d'une part et les secondes bornes d'entrée positive 64 et négative 70 d'autre part.

## Revendications

1. Boîtier de fusibles (10) pour véhicule automobile comportant d'une part un réceptacle (90) présentant un fond (92) et une ouverture (91) débouchant sur ledit fond (92), et d'autre part une paire de fusibles (14) ajustée sur ledit fond (92) et destinée à protéger un appareil électrique, chacun des fusibles (24, 26) de ladite paire présentant une première (28, 32) et une seconde extrémités (30, 34), ledit boîtier de fusibles (10) comprenant une paire de bornes de sortie (46, 50) couplées respectivement aux premières extrémités (28, 32) desdits fusibles et une paire de bornes d'entrée (80, 86) couplées respectivement aux secondes extrémités (30, 34) desdits fusibles, ladite paire de bornes de sortie (46, 50) s'étendant dudit réceptacle (90) selon une première direction, tandis que ladite paire de bornes d'entrée (80, 86) s'étend dudit réceptacle selon une seconde direction ;
**caractérisé en ce qu'**il comprend en outre, d'une part, au moins une autre paire (16) de fusibles ajustée sur ledit fond (92) et destinée à protéger un autre appareil électrique monté en parallèle avec ledit premier appareil, chacun des fusibles (25, 27) de ladite au moins une autre paire présentant une autre première (36, 40) et une autre seconde (38, 42) extrémités, et d'autre part, une autre paire de bornes d'entrée (64, 70) couplées respectivement aux autres secondes extrémités (38, 42), ladite autre paire de bornes d'entrée (64, 70) s'étendant sensiblement parallèlement à ladite seconde direction ;
les autres premières extrémités (36, 40) de ladite au moins une autre paire de fusibles étant respectivement couplées aux bornes de ladite paire de bornes de sortie (46, 50) ;
et **en ce qu'**il comprend :
- d'une part un premier conducteur de sortie (44) reliant l'une desdites premières extrémités (28) et l'une desdites autres premières extrémités (36) avec l'une desdites bornes de sortie (46), et d'autre part un second conducteur de sortie (48) reliant l'autre desdites premières extrémités (32) et l'autre desdites autres premières extrémités (40) avec l'autre desdites bornes de sortie (50), lesdits premier (44) et second (48) conducteurs s'étendant selon un même plan moyen proximal (PP) ;
- une paire de conducteurs d'entrée (52, 54) pour coupler respectivement ladite paire de bornes d'entrée (80, 86) auxdites secondes extrémités (30, 34) desdits fusibles, ladite paire de conducteurs d'entrée présentant respectivement deux premières parties (76, 82) superposées définissant deux plans distaux parallèles (Pd1, Pd2) ;
- et une autre paire de conducteurs d'entrée (56, 58) pour coupler respectivement ladite autre paire de bornes d'entrée (64, 70) auxdites autres secondes extrémités (38, 42) desdits fusibles de ladite autre paire, ladite autre paire de conducteurs d'entrée (56, 58) présentant respectivement deux autres premières parties (60, 66) s'étendant dans un même plan intermédiaire (PI).

2. Boîtier de fusibles selon la revendication 1, **caractérisé en ce que** ladite paire de bornes de sortie (46, 50) s'étend latéralement dudit réceptacle (90).

3. Boîtier de fusibles selon la revendication 1 ou 2, **caractérisé en ce que** ladite première direction est sensiblement parallèle audit fond (92).

4. Boîtier de fusibles selon l'une quelconque des revendications 1 à 3, **caractérisé en ce que** ladite seconde direction est sensiblement perpendiculaire audit fond (92).

5. Boîtier de fusibles selon l'une quelconque des revendications 1 à 4, **caractérisé en ce que** ladite une paire de bornes d'entrée (80, 86) et ladite une autre paire de bornes d'entrée (64, 70), s'étendent dans un sens opposé à ladite ouverture (91).

6. Boîtier de fusibles selon l'une quelconque des revendications 1 à 5, **caractérisé en ce que** lesdites autres premières extrémités (36, 42) de ladite au moins une autre paire de fusibles (16) sont respectivement couplées à l'intérieur dudit réceptacle (90) aux bornes de ladite paire de bornes de sortie (46, 50).

7. Boîtier de fusibles selon l'une quelconque des revendications 1 à 6, **caractérisé en ce que** ladite au moins une autre paire de fusibles (25, 27) présente une résistance inférieure à ladite une paire de fusibles (24, 26).

## Patentansprüche

1. Sicherungskasten (10) für ein Kraftfahrzeug, umfassend einerseits einen Behälter (90), der einen Boden (92) und eine Öffnung (91), die auf dem Boden (92) mündet, aufweist, und andererseits ein Paar Sicherungen (14), das auf dem Boden (92) eingerichtet ist und dazu bestimmt ist, eine elektrische Vorrichtung zu schützen, wobei jede der Sicherungen (24, 26) des Paars ein erstes (28, 32) und ein zweites Ende (30, 34) aufweist, der Sicherungskasten (10) umfassend ein Paar Ausgangsanschlüsse (46, 50), die jeweils an die ersten Enden (28, 32) der Sicherungen angeschlossen sind, und ein Paar Eingangsanschlüsse (80, 86), die jeweils an die zweiten Enden (30, 34) der Sicherungen angeschlossen sind, wobei sich das Paar Ausgangsanschlüsse (46, 50) in einer ersten Richtung von dem Behälter (90) erstreckt, während sich das Paar Eingangsanschlüsse (80, 86) in einer zweiten Richtung von dem Behälter erstreckt;
**dadurch gekennzeichnet, dass** er ferner einerseits mindestens ein anderes Paar (16) Sicherungen, das auf dem Boden (92) eingerichtet ist und dazu bestimmt ist, eine andere elektrische Vorrichtung zu schützen, die parallel zur ersten Vorrichtung angebracht ist, wobei jede der Sicherungen (25, 27) des mindestens einen anderen Paars ein anderes erstes (36, 40) und ein anderes zweites (38, 42) Ende aufweist, und andererseits ein anderes Paar Eingangsanschlüsse (64, 70), die jeweils an die anderen zweiten Enden (38, 42) angeschlossen sind, umfasst, wobei sich das andere Paar Eingangsanschlüsse (64, 70) im Wesentlichen parallel zu der zweiten Richtung erstreckt;
wobei die anderen ersten Enden (36, 40) des mindestens einen anderen Paars Sicherungen jeweils an die Anschlüsse des Paars Ausgangsanschlüsse (46, 50) angeschlossen sind;
und dadurch, dass er Folgendes umfasst:
- einerseits einen ersten Ausgangsleiter (44), der das eine der ersten Enden (28) und das eine der anderen ersten Enden (36) mit dem einen der Ausgangsanschlüsse (46) verbindet, und andererseits einen zweiten Ausgangsleiter (48), der das andere der ersten Enden (32) und den anderen der anderen ersten Enden (40) mit dem anderen der Ausgangsanschlüsse (50) verbindet, wobei sich der erste (44) und der zweite (48) Leiter in einer selben proximalen Mittelebene (PP) erstrecken;
- ein Paar Eingangsleiter (52, 54), um jeweils das Paar Eingangsanschlüsse (80, 86) an die zweiten Enden (30, 34) der Sicherungen anzuschließen, wobei das Paar Eingangsleiter jeweils zwei übereinanderliegende erste Abschnitte (76, 82) aufweist, die zwei parallele distale Ebenen (Pd1, Pd2) definieren;
- und ein anderes Paar Eingangsleiter (56, 58), um jeweils das andere Paar Eingangsanschlüsse (64, 70) an die anderen zweiten Enden (38, 42) der Sicherungen des anderen Paars anzuschließen, wobei das andere Paar Eingangsleiter (56, 58) jeweils zwei andere erste Abschnitte (60, 66) aufweist, die sich in einer selben Zwischenebene (PI) erstrecken.

2. Sicherungskasten nach Anspruch 1, **dadurch gekennzeichnet, dass** sich das Paar Ausgangsanschlüsse (46, 50) seitlich von dem Behälter (90) erstreckt.

3. Sicherungskasten nach Anspruch 1 oder 2, **dadurch gekennzeichnet, dass** die erste Richtung im Wesentlichen parallel zum Boden (92) verläuft.

4. Sicherungskasten nach einem der Ansprüche 1 bis 3, **dadurch gekennzeichnet, dass** die zweite Richtung im Wesentlichen senkrecht zum Boden (92) verläuft.

5. Sicherungskasten nach einem der Ansprüche 1 bis 4, **dadurch gekennzeichnet, dass** sich das eine Paar Eingangsanschlüsse (80, 86) und das eine andere Paar Eingangsanschlüsse (64, 70) in einer entgegengesetzten Richtung zu der Öffnung (91) erstrecken.

6. Sicherungskasten nach einem der Ansprüche 1 bis 5, **dadurch gekennzeichnet, dass** die anderen ersten Enden (36, 42) des mindestens einen anderen Paars Sicherungen (16) jeweils innerhalb des Behälters (90) an die Anschlüsse des Paars Ausgangsanschlüsse (46, 50) angeschlossen sind.

7. Sicherungskasten nach einem der Ansprüche 1 bis 6, **dadurch gekennzeichnet, dass** das mindestens eine andere Paar Sicherungen (25, 27) einen Widerstand aufweist, der geringer als das eine Paar Sicherungen (24, 26) ist.

## Claims

1. Fuse box (10) for an automotive vehicle including a receptacle (90) having a bottom (92) and an opening (91) leading to said bottom (92), and a pair of fuses (14) fitted into said bottom (92) and intended to protect an electrical device, each of the fuses (24, 26) of said pair having a first end (28, 32) and a second end (30, 34), said fuse box (10) comprising a pair of output terminals (46, 50) coupled to the first ends (28, 32), respectively, of said fuses and a pair of input terminals (80, 86) coupled to the second ends (30, 34), respectively, of said fuses, said pair of output terminals (46, 50) extending from said receptacle (90) in a first direction, while said pair of input terminals (80, 86) extends from said receptacle in a second direction;
**characterized in that** it additionally comprises at least one other pair (16) of fuses fitted into said bottom (92) and intended to protect another electrical device that is connected in parallel with said first device, each of the fuses (25, 27) of said at least one other pair having another first end (36, 40) and another second end (38, 42), and another pair of input terminals (64, 70) coupled to the other second ends (38, 42), respectively, said other pair of input terminals (64, 70) extending substantially in parallel to said second direction;
the other first ends (36, 40) of said at least one other pair of fuses being coupled to the terminals of said pair of output terminals (46, 50), respectively;
and **in that** it comprises:
- a first output conductor (44) connecting one of said first ends (28) and one of said other first ends (36) with one of said output terminals (46), and a second output conductor (48) connecting the other of said first ends (32) and the other of said other first ends (40) with the other of said output terminals (50), said first (44) and second (48) conductors extending along one and the same proximal median plane (PP);
- a pair of input conductors (52, 54) for coupling said pair of input terminals (80, 86) to said second ends (30, 34), respectively, of said fuses, said pair of input conductors having two superposed first portions (76, 82) defining two parallel distal planes (Pd1, Pd2), respectively;
- and another pair of input conductors (56, 58) for coupling said other pair of input terminals (64, 70) to said other second ends (38, 42), respectively, of said fuses of said other pair, said other pair of input conductors (56, 58) having two other first portions (60, 66), respectively, extending along one and the same intermediate plane (PI).

2. Fuse box according to Claim 1, **characterized in that** said pair of output terminals (46, 50) extends laterally from said receptacle (90).

3. Fuse box according to Claim 1 or 2, **characterized in that** said first direction is substantially parallel to said bottom (92).

4. Fuse box according to any one of Claims 1 to 3, **characterized in that** said second direction is substantially perpendicular to said bottom (92).

5. Fuse box according to any one of Claims 1 to 4, **characterized in that** said pair of input terminals (80, 86) and said other pair of input terminals (64, 70) extend in an opposite direction to said opening (91).

6. Fuse box according to any one of Claims 1 to 5, **characterized in that** said other first ends (36, 42) of said at least one other pair of fuses (16) are coupled to the interior of said receptacle (90) at the terminals of said pair of output terminals (46, 50), respectively.

7. Fuse box according to any one of Claims 1 to 6, **characterized in that** the resistance of said at least one other pair of fuses (25, 27) is lower than that of said pair of fuses (24, 26).
